# EUROPÄISCHE PATENTSCHRIFT

(11) **EP 1 483 638 B1**
(45) Veröffentlichungstag und Bekanntmachung des Hinweises auf die Patenterteilung: **05.09.2007**
(21) Anmeldenummer: 03718673.1
(22) Anmeldetag: 24.02.2003
(51) Int. Cl.: G05B 23/02

(54) **DIAGNOSESYSTEM FÜR MINDESTENS EINE TECHNISCHE ANLAGE**
DIAGNOSIS SYSTEM FOR AT LEAST ONE TECHNICAL SYSTEM
SYSTEME DE DIAGNOSTIC POUR AU MOINS UNE INSTALLATION TECHNIQUE

(30) Priorität: 08.03.2002 EP 02005438
(43) Veröffentlichungstag der Anmeldung: 08.12.2004
(73) Patentinhaber: SIEMENS AKTIENGESELLSCHAFT, 80333 München (DE)
(72) Erfinder: GRÜHN, Michael, 91056 Erlangen (DE); KUNZE, Ulrich, 91088 Bubenreuth (DE); SCHILLER, Norbert, 91207 Lauf (DE)
(86) Internationale Anmeldenummer: PCT/EP2003/001864
(87) Internationale Veröffentlichungsnummer: WO 2003/077047

(56) Entgegenhaltungen:
- EP-A- 0 965 897
- WO-A-01/95041
- WO-A-01/97362
- WO-A-01/98849

## Beschreibung

Die Erfindung betrifft ein Diagnosesystem für eine technische Anlage, insbesondere für eine Kraftwerksanlage.

Beim Betrieb einer technischen Anlage entstehen infolge der sich im Laufe der Zeit verändernden Betriebsbedingungen eine Reihe von Betriebszuständen, welche daraufhin zu überprüfen sind, ob sie sich innerhalb tolerierbarer Toleranzen bewegen und von daher einem Normalbetrieb zuzuordnen sind, oder ob nicht zumindest vereinzelt Betriebszustände auftreten, welche den Betrieb der Anlage und/oder das Betriebspersonal und/oder die Umwelt gefährden.

Deshalb ist es insbesondere bei einer Kraftwerksanlage erforderlich, dass zumindest in Zweifelsfällen die jeweiligen Betriebszustände der Anlage von einem Experten beurteilt werden müssen, um ggf. beim Vorliegen eines unzulässigen und/oder unerwünschten Betriebszustands Gegenmaßnahmen rechtzeitig ergreifen zu können. Der Rat des Experten muss schnell verfügbar sein, da u.U. die weitere Betriebsweise des Kraftwerks davon abhängt und auch eine etwaige Gefährdung ausgeschlossen werden muss. Daher ist eine schnelle Reaktionszeit bei auftretenden unzulässigen und/oder unerwünschten Betriebszuständen der technischen Anlage unverzichtbar, da die Betriebssicherheit im weitesten Sinne und/oder die Kosten für den Betrieb der technischen Anlage davon betroffen sind.

Zur Bewertung des Betriebszustands einer technischen Anlage, insbesondere einer Kraftwerksanlage, werden Bewertungsinformationen in Form von Betriebsmesswerten mit geeigneten Mitteln untersucht, beispielsweise mittels dafür geschaffenen Auswertetools, mit welchen sich Aussagen aus den Betriebsmesswerten ableiten lassen, aus denen hervorgeht, ob und/oder wann und/oder in welchem Umfang ein Eingriff in den Betrieb der technischen Anlage erforderlich ist. Aus den Betriebsmesswerten können dazu beispielsweise Kenngrößen abgeleitet werden, welche bestimmte Betriebszustände repräsentieren und welche sich hinsichtlich eines Normalbetriebs innerhalb bestimmter Grenzen bewegen. Aus der Quantität der jeweiligen Kenngröße kann dann ein Experte auf mögliche Betriebszustände schließen, welche sich insbesondere außerhalb eines zulässigen Betriebsbereichs der technischen Anlage bewegen und daher Reaktionen darauf angezeigt sind.

Ein mit der Bewertung des Betriebszustands einer technischen Anlage beauftragter Experte muss sich derzeit zum Sammeln und Auswerten der Information entweder direkt zur technischen Anlage begeben oder eine Verbindung, beispielsweise eine Datenfernübertragung, zu der technischen Anlage herstellen, um die gewünschten Informationen zu erhalten.

Von der technischen Anlage selbst und/oder aus einer Datenbank des Leitsystems der technischen Anlage erhält der Experte die für die Beurteilung des Betriebszustands benötigten Betriebsmesswerte; die beispielsweise zur Ermittlung der Kenngrößen benötigten Werkzeuge, insbesondere Software-Tools, müssen jedoch am Aufenthaltsort des Experten verfügbar sein, indem sie beispielsweise direkt in der technischen Anlage installiert sind, von ihm dorthin mitgebracht werden oder auf dem Rechner installiert sind, von welchem aus der Experte eine Datenfernübertragung mit der technischen Anlage hergestellt hat.

Vereinzelt sind auch sogenannte "Remote Expert Center" bekannt, in welchen die von Experten benötigte Infrastruktur, insbesondere an Rechner- und Softwarehilfsmittel, verfügbar ist, um eine Diagnose von Betriebszuständen technischer Anlagen durchführen zu können. Von diesen Remote Expert Centern aus sind Datenfernübertragungen zu im Allgemeinen mehreren technischen Anlagen herstellbar, so dass jeweils in den einzelnen technischen Anlagen keine umfangreichen Diagnosesysteme installiert sein müssen. Jedoch muss sich zur Erstellung einer Diagnose mindestens ein geeigneter Experte im Remote Expert Center aufhalten, da nur dort die erforderlichen Hilfsmittel verfügbar sind. Ein Vorhalten von Experten und/oder Expertenwissen in einem derartigen Center bringt jedoch zwangsläufig den Nachteil hoher Kosten mit sich.

Aus der EP 0 965 897 A1 ist eine Vorrichtung zu entnehmen, bei der mehrere Feldgeräte-Management-Systeme örtlich getrennter Industrieanlagen so miteinander vernetzt sind, dass Wartungsdaten von Feldgeräten zwischen den Industrieanlagen ausgetauscht werden können. Der Datenaustausch erfolgt entweder unmittelbar zwischen den einzelnen Feldgeräte-Management-Systemen oder über ein weiteres zentrales Feldgeräte-Management-System, welches mit den einzelnen Feldgeräte-Management-Systemen kommunizieren kann. Das zentrale Feldgeräte-Management-System kann einen zentralen Feldgerätedaten-Server und eine zentrale Datenbank aufweisen, welche die während eines Zeitraums angefallenen Wartungs- und Performancedaten der Feldgeräte der einzelnen Feldgeräte-Mangement-Systeme sammelt und analysiert.

Der Erfindung liegt daher die Aufgabe zugrunde, ein Diagnosesystem für mindestens eine technische Anlage anzugeben, welches einfach zu realisieren und zu installieren ist, welches keine hohen Errichtungskosten verursacht und flexibel einsetzbar ist.

Insbesondere soll es möglich sein, von nahezu beliebigen Orten auf der Welt aus eine Diagnose einer oder mehrerer technischen Anlagen durchzuführen.

Die Aufgabe wird erfindungsgemäß gelöst durch ein Diagnosesystem für mindestens eine technische Anlage, welches folgende Komponenten umfasst:
- mindestens eine Erfassungseinheit zur Erfassung von Messdaten, welche in mindestens einer der technischen Anlagen anfallen und dort mittels Sensoren aufgenommen sind,
- mindestens eine Speichereinheit, welche mit der Erfassungseinheit verbunden ist und mittels welcher die Messdaten speicherbar sind,
- mindestens eine, mindestens mit der Speichereinheit verbundene, Diagnoseeinheit zur Klassifizierung von aktuellen und/oder vergangenen und/oder erwarteten, von den Messdaten repräsentierten, Betriebszuständen der technischen Anlage, und
- mindestens eine, mindestens mit der Speichereinheit verbundene, Server-Einheit, mittels welcher maschinenlesbare Daten basierend auf der HTML-Sprache erzeugbar sind, wobei zumindest Teile der maschinenlesbaren Daten zu einem Zeitpunkt erzeugt sind, in dem durch mindestens einen Client-Rechner über eine Kommunikationsverbindung mittels eines auf dem Client-Rechner installierten Internet-Browsers eine Verbindung zur Server-Einheit des Diagnosesystems hergestellt ist und die Teile der maschinenlesbaren Daten vom Client-Rechner angefordert sind.

Die Erfindung geht dabei von der Überlegung aus, dass ein Diagnosesystem dann besonders flexibel einsetzbar ist, wenn die von ihm erfassten und ermittelten Daten bezüglich einer oder mehrerer technischen Anlagen an möglichst allen Orten der Welt abrufbar sind, so dass ein Experte, welcher mit der Beurteilung von Betriebszuständen einer technischen Anlage betraut ist, nicht ortsgebunden ist und sich insbesondere nicht direkt am Installationsort der technischen Anlage aufhalten muss. Da es sich bei den in einer technischen Anlage anfallenden Messdaten um dynamische Informationen handelt, welche sich im Laufe der Zeit auch schnell und mit einer großen Schwankungsbreite ändern können, ist es erforderlich, dass bei einem erfindungsgemäßen Diagnosesystem die Möglichkeit vorgesehen ist, dynamische Informationen, welche die Messdaten der technischen Anlage umfassen, so aufzubereiten, dass sie in einfacher Weise möglichst an vielen Orten in nahezu beliebiger Entfernung abrufbar sind.

Beim erfindungsgemäßen Diagnosesystem ist dies dadurch erreicht, dass die Server-Einheit die von der Erfassungseinheit erfassten und in der Speichereinheit gespeicherten Messdaten sowie von der Diagnoseeinheit ermittelte weitere Diagnosedaten bezüglich der technischen Anlage zu so genannten dynamischen HTML-Seiten verarbeitet, welche in einfacher Weise über ein Intranet und/oder das Internet übertragbar und abrufbar sind.

Im Unterschied zu den meisten bekannten Internetseiten, welche größtenteils statische Informationen enthalten und daher als statische HTML-Seiten gespeichert und abgerufen werden, ist es beim erfindungsgemäßen Diagnosesystem vorgesehen, dass die beispielsweise von einem Experten abgerufenen Messdaten und/oder weitere Diagnosedaten einer technischen Anlage erst zum Zeitpunkt des Datenabrufs zu einer oder mehreren HTML-Seiten verarbeitet werden; diese wichtige Kerninformation bezüglich der technischen Anlage ist also erst zum Zeitpunkt des Datenabrufs, beispielsweise mittels des Internets, zu mindestens einer HTML-Seite verarbeitet.

Die maschinenlesbaren Daten basierend auf der HTML-Sprache umfassen also Internetseiten, welche erst im Moment eines Zugriffs auf die Server-Einheit beispielsweise durch einen Web-Browser, von der Server-Einheit erzeugt werden.

Derartige dynamische HTML-Seiten können beispielsweise durch folgende Techniken erzeugt werden:

### Server-Side-Scripting:

Die HTML-Seite ist mit einem Scriptcode als Datei in einem Speicher der Server-Einheit abgelegt. Bevor diese Datei von der Server-Einheit über das Internet übertragen wird, ersetzt ein spezielles Softwareprogramm den Scriptcode durch dynamisch erzeugtes Standard-HTML. Der konkrete Inhalt einer abgerufenen HTML-Seite, welche Messdaten und/oder weitere Diagnosedaten oder auch andere Daten der technischen Anlage umfasst, ist also erst zum Zeitpunkt des Datenabrufs von der Server-Einheit erzeugt.

### CGI-Programmierung:

Bei diesem Verfahren wird die abgerufene HTML-Seite vollständig durch CGI-Programme erzeugt. Diese Programmierung ist bekannt und hat beispielsweise den Vorteil, dass zum Erstellen eines CGI-Programms keine spezielle Script-Sprache erlernt werden muss.

Bei der Verwendung der CGI-Programmierung erzeugt also ein entsprechendes CGI-Programm zum Zeitpunkt des Zugriffs, beispielsweise eines Clients über das Internet auf die Server-Einheit, eine HTML-Seite, welche beispielsweise aktuelle Messdaten einer technischen Anlage umfasst, und diese HTML-Seite wird dann mittels der Server-Einheit über das Internet übertragen.

Weiterhin ist es vorgesehen, dass die maschinenlesbaren Daten, welche von der Server-Einheit erzeugt sind, zumindest zum Teil nicht vorab gespeichert und bei einem Abruf lediglich übertragen werden, sondern dass diese Teile erst zum Zeitpunkt eines Datenabruf von der Server-Einheit, beispielsweise mittels eines Client-Rechners, dynamisch erzeugt sind. Dies können insbesondere Informationen der technischen Anlage sein, welche sich im Laufe der Zeit typischerweise verändern, wie die in der technischen Anlage aufgenommenen Messdaten sowie Daten, welche aufgrund dieser Messdaten erzeugt sind, beispielsweise die von der Diagnoseeinheit aus den Messdaten abgeleiteten weiteren Diagnosedaten. Insbesondere bei den Messdaten und daraus abgeleiteten Daten der technischen Anlage ist es zweckmäßig, diese erst zum Zeitpunkt eines Datenabrufs in Form von HTML-Seiten zu erzeugen, da wegen der dynamischen Natur dieser die technische Anlage betreffenden Daten deren Inhalt vorab nicht fest steht.

Andere, insbesondere allgemeine Informationen der technischen Anlage wie statische Übersichtsbilder, Fotos, Beschreibungen etc., können vorab zu statischen HTML-Seiten oder statischen Teilen von HTML-Seiten aufbereitet sein und zum Zeitpunkt des Datenabrufs lediglich aus dem Speicher abgerufen und übertragen sein, ggf. ergänzt um dynamische Informationen, als eine oder mehrere dynamische HTML-Seiten.

Besonders vorteilhaft sind die maschinenlesbaren Daten mittels des TCP/IP-Protokolls über die Kommunikationsverbindung, welche insbesondere ein Intranet und/oder das Internet umfasst, von der Server-Einheit zum Client-Rechner übertragen.

Bei dieser Ausgestaltung der Erfindung wird zum übertragen der abgerufenen Daten über die Kommunikationsverbindung das TCP/IP-Protokoll verwendet, welches weitgehend standardisiert und im Zusammenhang mit Internet-Anwendungen weit verbreitet ist. Es ist also nicht erforderlich, zum Übertragen der angeforderten Daten einen besonderen Datenaustausch-Mechanismus zur Verfügung zu stellen; es wird das bekannte und ohne besondere Vorkehrungen verwendbare TCP/IP-Protokoll verwendet, welches bereits auf einer großen Anzahl von Rechnern mit Internet-Anbindung zur Verfügung steht.

In einer weiteren vorteilhaften Ausgestaltung der Erfindung ist mittels der maschinenlesbaren Daten eine dynamische Bedien- und/oder Beobachtungsfläche des Diagnosesystems gebildet.

Bei dieser Ausführungsform der Erfindung muss auf einem Rechner, beispielsweise auf dem Client-Rechner, welcher von der Server-Einheit Daten abruft, keine spezielle Software-Umgebung installiert sein, um die von der Server-Einheit abgerufenen Daten zu lesen und verarbeiten zu können.

Die von der Server-Einheit basierend auf der HTML-Sprache erzeugten maschinenlesbaren Daten umfassen hierbei auch die graphischen Informationen, mittels welcher ein Bediener, welcher beispielsweise über das Internet Daten von der Server-Einheit abruft, die abgerufenen Daten auf seinem Rechner darstellen und weiterverarbeiten kann. Es kann sich dabei beispielsweise um ein graphisches Prozessbild der technischen Anlage handeln, in welches die aktuellen Werte von Messdaten sowie von weiteren von den Messdaten abgeleiteten Informationen wie z.B. weitere Diagnosedaten handeln. Darüber hinaus können neben der Darstellung von Informationen der technischen Anlage auch Bedienfunktionen von den maschinenlesbaren Daten umfasst sein, beispielsweise Mittel, mit denen der Benutzer gezielt weitere, (noch) nicht dargestellte, Informationen anfordern kann, beispielsweise von der Diagnoseeinheit des Diagnosesystems. Die Diagnoseeinheit kann dabei beispielsweise Software-Tools umfassen, mittels welcher verschiedene Auswertungsmöglichkeiten der Messdaten zur Verfügung gestellt werden. Erkennt nun beispielsweise ein Anlagenexperte nach einem Zugriff auf die Server-Einheit des Diagnosesystems, dass ein aktueller Betriebszustand der technischen Anlage einer eingehenderen Untersuchung bedarf, so kann er mittels der von den maschinenlesbaren Daten umfassten (dynamischen) Bedien- und/oder Beobachtungsoberfläche gezielt weitere Aktionen durchführen, beispielsweise die Ausführung von speziellen Auswertungsprogrammen, welche von den Software-Tools umfasst sind und detailliertere Auswertungen eines Betriebszustand erlauben.

Vorteilhaft umfassen die maschinenlesbaren Daten HTML-Seiten, welche als vorgefertigte, statische Daten in einem Speicher, insbesondere in der Speichereinheit, des Diagnosesystems abgelegt sind und/oder welche von der Server-Einheit durch Zusammenführung eines Seitenerstellungscodes und mindestens eines Teils der in der Speichereinheit gespeicherten Messdaten dynamisch erzeugt sind.

Bei dieser Ausführungsform der Erfindung wird nicht der gesamte Dateninhalt einer oder mehrerer HTML-Seiten, welche von der Server-Einheit erzeugt sind, erst zum Zeitpunkt eines Datenzugriffs auf die Server-Einheit festgelegt.

Meist sind zumindest einige die technische Anlage betreffenden Informationen, welche von der Server-Einheit bei einem Zugriff übertragen werden, statischer Natur, unterliegen also während des Betriebs der technischen Anlage keinen Veränderungen, beispielsweise ein Übersichtsplan über Komponenten der technischen Anlage und deren Verschaltung. Diese statischen Informationen können auch Fotos der technischen Anlage oder von Anlagenkomponenten, Betriebshandbücher oder ähnliches umfassen. Derartige Informationen müssen nicht erst zum Zeitpunkt eines Datenabrufs erzeugt werden, sondern können vorab als HTML-Seiten erzeugt und gespeichert werden. Dynamische Informationen, wie aktuelle Werte von Messdaten und/oder von den Messdaten abgeleiteten Informationen wie weitere Diagnosedaten der technischen Anlage können dagegen vorab nicht abgespeichert werden, da sie erst während des Betriebs der technischen Anlage anfallen und oft starken Schwankungen unterworfen sind.

Die Zusammenführung von statischen und dynamischen Informationen erfolgt mittels des Seiten-Erstellungscodes, welcher zum Zeitpunkt eines Datenzugriffs auf die Server-Einheit auf dieser abläuft und die statischen und dynamischen Informationen zu einer dynamischen HTML-Seite zusammenführt. Bei dieser Ausführungsform der Erfindung ist es vermieden, dass Rechenzeitintensive Programme zum Zeitpunkt des Datenabrufs ablaufen müssen, um eine dynamische HTML-Seite vollständig zu erzeugen; es wird nur der dynamische Anteil der dynamischen HTML-Seite neu erzeugt.

In einer weiteren vorteilhaften Ausgestaltung der Erfindung ist das Diagnosesystem für mehrere technische Anlagen ausgelegt und umfasst genau eine Speichereinheit, in welcher die in den technischen Anlagen jeweils anfallenden Messdaten zentral gespeichert sind.

Bei dieser vorteilhaften Ausgestaltung der Erfindung nimmt die genau eine Speichereinheit die Rolle einer zentralen Datenbank ein, in welcher als Archiv die Messdaten aller Kraftwerke gespeichert sind. Diese Messdaten können regelmäßig und/oder auf Anforderung in diese zentrale Datenbank eingespeist sein. Dabei ist die genau eine Speichereinheit vorteilhaft mit einem Web-Server versehen, so dass auf einfache Weise über das Internet von allen Orten mit Internet-Anbindung aus die in dieser zentralen Datenbank gespeicherten Daten abrufbar sind. Die im Zusammenhang mit anderen Ausführungen der Erfindung bereits genannten Software-Tools zur Datenauswertung können ebenfalls auf Rechnern gespeichert sein, welche über einen Zugang zum Internet verfügen, so dass in der zentralen Datenbank gespeicherte Messdaten der technischen Anlagen über das Internet zu den Rechnern transferiert werden können, auf welchen die vorher genannten Software-Tools installiert sind. Auf diese Weise ist ein ortsunabhängiges virtuelles Diagnoselabor geschaffen, welches von allen Orten mit Internet-Anbindung aus genutzt werden kann. Die Software-Tools können die von Ihnen jeweils benötigten Eingabedaten aus der zentralen Datenbank über das Internet anfordern und die von Ihnen ermittelten Ergebnisse und Folgerungen wieder zurück in die Datenbank schreiben. Der Aufruf und die Ausführung dieser Software-Tools kann beispielsweise automatisch und/oder per Anforderung einer entsprechenden Internet-Seite erfolgen, wobei diese Internet-Seite derart ausgestaltet sein kann, dass sie nach deren Aufruf bereits die gewünschten/angeforderten Ergebnisse enthält. Der Mechanismus zum Erstellen einer derartigen dynamischen Internet-Seite kann beispielsweise durch Verfahren realisiert sein, welche bereits im Zusammenhang mit der Generierung von InternetSeiten durch die Server-Einheit des erfindungsgemäßen Diagnosesystems dargestellt wurden.

Ein Experte, der Messdaten einer oder auch mehrerer technischen Anlagen auswerten will, benötigt also im Wesentlichen nur einen Rechner mit einem installierten bekannten Internet-Browser und einen Zugang zu einem Intranet und/oder Internet. Damit kann er alle von ihm benötigten Informationen, beispielsweise aus der zentralen Datenbank der letztgenannten Ausführungsform, abrufen, spezielle Auswertungen mit Hilfe der beispielhaft genannten Software-Tools durchführen und so eine von ihm geforderte Bewertung eines Betriebszustands einer oder mehrerer technischen Anlagen vornehmen.

Wesentliche Vorteile des erfindungsgemäßen Diagnosesystems liegen insbesondere im schnellen Zugriff auf die Messdaten und weitere Diagnosedaten von technischen Anlagen sowie auf die genannten Software-Tools, wobei der Zugriff nahezu unabhängig vom Aufenthaltsort des Experten ist. Weiterhin benötigt der Experte zur Erstellung einer Auswertung keine spezielle Software oder Hardware.

Mit Hilfe eines erfindungsgemäßen Diagnosesystems kann also auf einfache Weise ein virtuelles Diagnoselabor geschaffen werden, wobei die Messdaten einer Anzahl von technischen Anlagen in einer zentralen Datenbank speicherbar sind - eine redundante Speicherung ist dabei leicht realisierbar -, wobei die Messdaten verschiedener technischer Anlagen auf einfache Weise miteinander verglichen werden können, wobei die Auswertung der Messdaten mit Hilfe der Software-Tools weiter verfeinert werden kann, insbesondere offline, wobei auf einfache Weise eine Fernwartung der technischen Anlagen realisiert ist, wobei neue Diagnoseverfahren leicht an realen Messdaten getestet werden können, und wobei das Diagnosesystem und/oder die Diagnoseeinheiten in den technischen Anlagen leicht technisch hochgerüstet werden können, da ein erfindungsgemäßes Diagnosesystem bevorzugt aus einer Anzahl von Modulen besteht, auf welche jeweils gezielt ein Zugriff möglich ist und welche zum Datenaustausch untereinander jeweils gezielt ausgestaltete Schnittstellen umfassen.

Ferner ist anzumerken, dass eine Bedienung sowohl der Diagnoseeinheiten in den Kraftwerken als auch der zentralen Datenbank, welche in einer genannten vorteilhaften Ausgestaltung der Erfindung genau eine Speichereinheit umfasst, von jedem Rechner aus erfolgen kann, welcher über eine Anbindung zu einem Intranet/Internet verfügt. Auch die genannten Software-Tools und der von der zentralen Datenbank umfasste Web-Server sind vorteilhaft internetfähig und können somit von nahezu beliebigen Rechnern mit Internetanbindung aus gesteuert werden.

Im Folgenden sind zwei Ausführungsformen der Erfindung näher dargestellt.

Es zeigen:
- FIG 1: ein erfindungsgemäßes Diagnosesystem, dessen Server-Einheit an das Internet angebunden ist,
- FIG 2: ein erfindungsgemäßes Diagnosesystem ausgelegt für eine Mehrzahl an technischen Anlagen, wobei das Internet eine zentrale Rolle beim Datenaustausch zwischen verschiedenen Teilsystemen des Diagnosesystems einnimmt.

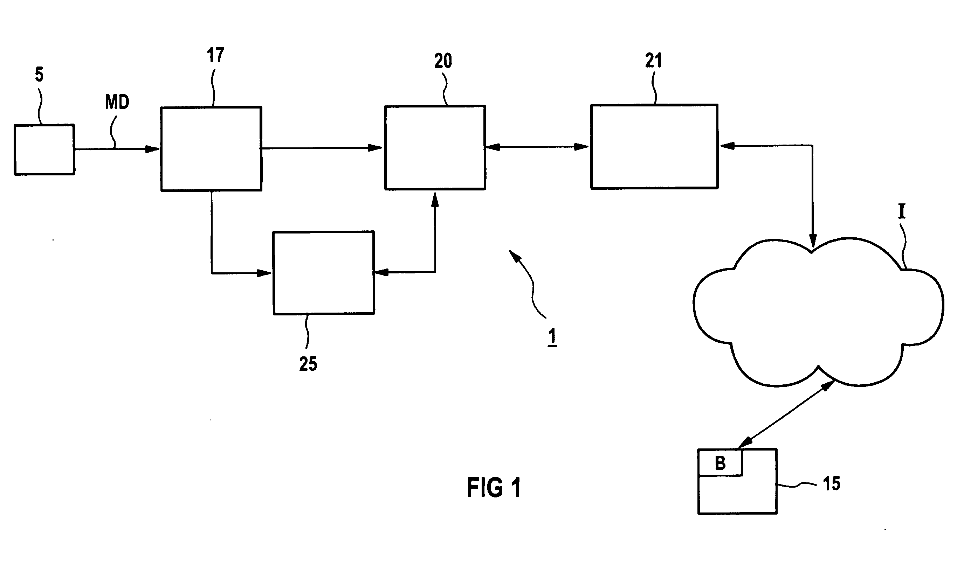

FIG 1 zeigt ein erfindungsgemäßes Diagnosesystem 1, welches eine Erfassungseinheit 17 zur Erfassung von Messdaten MD, eine Speichereinheit 20, eine Diagnoseeinheit 25 und eine Server-Einheit 21 umfasst.

Die Erfassungseinheit 17 nimmt dabei die Messdaten MD auf, welche in der technischen Anlage 5 anfallen und dort mittels Sensoren aufgenommen sind. Die Speichereinheit 20 ist mit der Erfassungseinheit 17 verbunden, so dass die Messdaten MD in der Speichereinheit 20 speicherbar sind.

Um aktuelle, vergangene und/oder erwartete Betriebszustände der technischen Anlage 5 aus den Messdaten MD ermitteln zu können, ist eine Diagnoseeinheit 25 beim erfindungsgemäßen Diagnosesystem 1 der FIG 1 mit der Erfassungseinheit 17 und der Speichereinheit 20 verbunden. Auf diese Weise können mittels der Diagnoseeinheit 25 sowohl aktuelle, mittels der Erfassungseinheit 17 aufgenommene Messdaten MD der technischen Anlage, als auch länger zurückliegende, historische Messdaten der technischen Anlage 5, welche in der Speichereinheit 20 abgelegt sind, zu Diagnosezwecken verarbeitet werden. In der Speichereinheit 20 können selbstverständlich auch unmittelbar zurückliegende, also aktuelle Messdaten MD der technischen Anlage 5 abgelegt sein.

Aus diesen aktuellen und/oder historischen Messdaten MD, welche einen aktuellen und/oder vergangenen Betriebszustand der technischen Anlage betreffen, können mittels der Diagnoseeinheit 25 Klassifizierungen K dieser Betriebszustände vorgenommen werden, beispielsweise dahingehend, ob ein aktueller und/oder vergangener Betriebszustand der technischen Anlage 5 sich in einem zulässigen Toleranzbereich bewegt und daher als Normalbetriebszustand anzusehen ist, oder ob ein aktueller und/oder vergangener Betriebszustand der technischen Anlage 5 vorliegt, welcher sich außerhalb des Normalbetriebs bewegt und deshalb einer eingehenderen Untersuchung bedarf. Ferner können mittels der Diagnoseeinheit 25 aus aktuellen und historischen Messdaten MD der technischen Anlage 5 erwartete zukünftige Betriebszustände der technischen Anlage extrapoliert werden, beispielsweise in Form einer Voraussage, ob sich ein bestimmter Messwert der technischen Anlage mit hoher Wahrscheinlichkeit erhöhen oder erniedrigen wird, oder ob zu erwarten ist, dass sich dieser Messwert konstant verhalten wird. Derartige, den Betrieb der technischen Anlage 5 betreffende, Trends des Betriebsverhaltens sind sehr wichtig, um einen sicheren und erwünschten Betrieb der technischen Anlage 5 auch in unmittelbarer, naher oder auch ferner Zukunft sicherstellen zu können.

Um die Messdaten MD derart auswerten zu können, kann die Diagnoseeinheit 25 Software-Tools umfassen, mittels welchen beispielsweise statistische Auswertungen, Trendanalysen oder sonstige Bewertungen durchführbar sind. Die Software-Tools können auch in einem separaten Modul, z.B. auf einem separaten Rechner, installiert sein.

Die Klassifizierung K der mittels der Messdaten MD repräsentierten Betriebszustände der technischen Anlage soll dies alles umfassen, insbesondere soll die Klassifizierung einen Rückschluss darauf erlauben, ob die der Klassifizierung unterzogenen Messdaten MD einem Normalbetrieb zuzuordnen sind oder von diesem abweichen. Entsprechende graphische Darstellungsmöglichkeiten von Betriebszuständen können ebenfalls in der Diagnoseeinheit 25 oder einem separaten Modul vorgesehen sein.

Die Diagnoseeinheit 25 übermittelt ihre Bewertungsergebnisse an die Speichereinheit 20, welche mit einer Server-Einheit 21 verbunden ist. Die Server-Einheit 21 ist ertüchtigt, maschinenlesbare Daten MC basierend auf der HTML-Sprache zu erzeugen, so dass in der Speichereinheit 20 abgelegte Daten auf einfache Weise über das Internet I übertragbar sind.

Ein Client-Rechner 15, welcher über einen Internet-Browser B verfügt, kann mittels des Internet-Browser B über das Internet I mit der Server-Einheit 21 des erfindungsgemäßen Diagnosesystems 1 eine Verbindung aufnehmen, so dass dem Betrieb der technischen Anlage betreffende Messdaten MD sowie vom Diagnosesystem daraus ermittelte weitere Diagnosedaten auf dem Client-Rechner anzeigbar sind. Bevorzugt geschieht der Datenaustausch dabei mittels des TCP/IP-Protokolls.

Da viele den Betrieb der technischen Anlage betreffende Daten sich im Laufe der Zeit mehr oder weniger schnell verändern, werden zumindest diejenigen maschinenlesbaren Daten MC, insbesondere HTML-Seiten, welche zuvor genannte, sich verändernde Informationen umfassen, erst zu dem Zeitpunkt als HTML-Seite erzeugt, zu dem der Client-Rechner 15 über das Internet I auf die Server-Einheit 21 zugreift und Daten der technischen Anlage 5 abruft.

Die Erzeugung dieser sogenannten dynamischen HTML-Seiten kann beispielsweise mittels Scriptcode, welcher zum Zeitpunkt des Zugriffs auf die Server-Einheit in ein Standard-HTML-Dokument umgewandelt wird, oder durch die Methoden der bekannten CGI-Programmierung realisiert sein.

Darüber hinaus können die von der Server-Einheit 21 erzeugten maschinenlesbaren Daten MC eine dynamische Bedien- und/oder Beobachtungsoberfläche des Diagnosesystems 1 umfassen, so dass es auf Seiten des Client-Rechners 15 zur Beobachtung der vom Diagnosesystem 1 gelieferten Daten sowie zur Bedienung von Funktionen des Diagnosesystems 1, welche beispielsweise eine weitere Auswertung der Messdaten MD wie eine Trendanalyse mittels der Diagnoseeinheit 25 umfassen können, neben des Internet-Browsers B keiner weiteren Software-Programme bedarf.

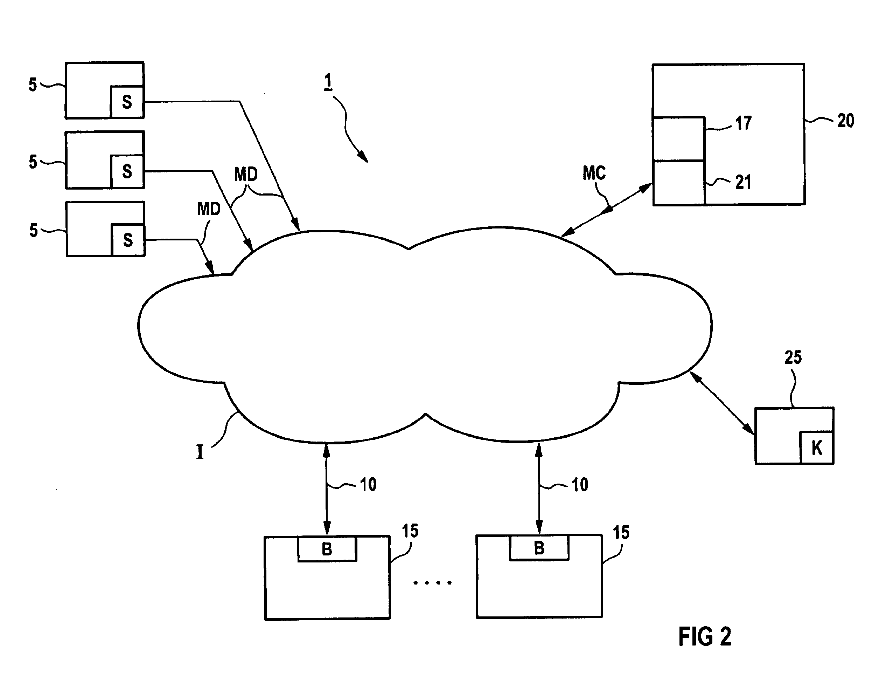

Das in der FIG 2 gezeigte erfindungsgemäße Diagnosesystem 1 ist ausgelegt für die Diagnose einer Anzahl von technischen Anlagen 5.

Die technischen Anlagen 5 umfassen dabei jeweils eine Server-Applikation S, mittels welcher die in den technischen Anlagen jeweils erfassten Messdaten MD über das Internet I übertragbar sind. Diese Übertragung kann beispielsweise in Form von dynamisch erzeugten HTML-Seiten erfolgen.

Eine Speichereinheit 20 ist ebenfalls mit dem Internet I verbunden und umfasst eine Erfassungseinheit 17 und eine Server-Einheit 21. Die Erfassungseinheit 17 erfasst die von den technischen Anlagen 5 über das Internet I übertragenen Messdaten MD der technischen Anlagen, so dass diese Messdaten MD in der Speichereinheit 20 abgelegt werden können. Dies kann entweder automatisch beispielsweise in festgelegten Zeitabständen geschehen, oder aufgrund eine gezielten Abrufs der Messdaten MD oder ereignisgesteuert, so dass beispielsweise insbesondere dann Messdaten MD von mindestens einer der technischen Anlagen 5 zur Speichereinheit 20 übertragen werden, wenn sich eine Veränderung des Betriebszustands der betreffenden technischen Anlage 5 ergeben hat. Die Datenübertragung von den technischen Anlagen 5 zur Speichereinheit 20 kann auch in einer Mischform der genannten Mechanismen geschehen.

Mittels der Server-Einheit 21 sind maschinenlesbare Daten MC basierend auf der HTML-Sprache erzeugbar, so dass in der Speichereinheit 20 abgelegte Daten, insbesondere die Messdaten MD der technischen Anlage 5, als HTML-Seiten über das Internet I übertragbar sind. Die Speichereinheit 20 ist als zentrale Datenbank ausgestaltet, so dass die Messdaten MD einer Anzahl von technischen Anlagen 5 in dieser zentralen Datenbank 20 speicherbar sind.

Eine Diagnoseeinheit 25 zur Klassifizierung K der die Betriebszustände der technischen Anlagen 5 repräsentierenden Messdaten MD ist ebenfalls mit dem Internet I verbunden. Die Diagnoseeinheit 25 umfasst dazu vorteilhaft einen Web-Server.

Ein Experte, welcher nun den Betriebszustand einer oder mehrerer technischen Anlagen 5 bewerten will, kann nun mittels eines Client-Rechners 15, auf welchem ein Internet-Browser B installiert ist, über eine Kommunikationsverbindung 10, welche vorteilhaft vom Internet umfasst ist, eine Verbindung zur Server-Einheit 21 der Speichereinheit 20 aufnehmen und von dort über das Internet I Daten anfordern. Der Datentransfer erfolgt dabei bevorzugt mittels des TCP/IP-Protokolls. Die in der zentralen Speichereinheit 20 abgelegten Daten können nun gezielt von einem der Client-Rechner 15 oder auch von mehreren abgerufen werden. Dazu werden die angeforderten Daten als maschinenlesbare Daten MC basierend auf der HTML-Sprache von der Server-Einheit 21 der Speichereinheit 20 über das Internet I zum betreffenden Client-Rechner 15 übertragen, bevorzugt als dynamische HTML-Seite, welche zu dem Zeitpunkt durch die Server-Einheit 21 erzeugt ist, in dem der Zugriff vom betreffenden Client-Rechner 15 auf die Server-Einheit 21 der Speichereinheit 20 stattfindet. Es ist auch möglich, dass nur Teile der zur übertragenden Informationen dynamisch zum Zeitpunkt der Anforderung mittels der Server-Einheit erzeugt sind und ergänzende statische Informationen aus einem Speicher abgerufen und anschließend zusammen mit den dynamischen Informationsteilen zu einer dynamischen HTML-Seite zusammengeführt werden, insbesondere mit Hilfe eines Seiten-Erstellungscodes. Dieser Seiten-Erstellungscode kann in der Server-Einheit 21 implementiert sein und eine bekannte Scriptsprache umfassen.

Die Figur 2 zeigt folglich ein ortsungebundenes virtuelles Diagnosesystem, mittels welchem eine Anzahl von technischen Anlagen 5 von nahezu beliebigen Orten aus diagnostiziert werden können. Außer eines bloßen Abrufs von aktuellen und/oder gespeicherten Messdaten MD der technischen Anlage 5 können diese Daten mittels der Diagnoseeinheit 25, welche ebenfalls ortsungebunden mit dem Internet verbunden ist, zu weiteren Diagnosedaten weiterverarbeitet werden. Die Ergebnisse derartiger Weiterverarbeitungen, beispielsweise die Ermittlung von Trends, Bestimmung von bestimmten Arten von Betriebszuständen, statistische Auswertungen etc. können von der Diagnoseeinheit 25 über das Internet I an die Speichereinheit 20 übermittelt und dort beispielsweise zusammen mit den der weiteren Bewertung unterworfenen Messdaten MD abgelegt und zu einem späteren Zeitpunkt beispielsweise mittels eines oder mehrerer der Client-Rechner 15 abgerufen werden.

Die Ausführungsform der FIG 2 bietet also ein Höchstmaß an Flexibilität zur Beurteilung von Betriebszuständen technischer Anlagen 5, wobei insbesondere nahezu jegliche räumliche Beschränkung hinsichtlich des Installationsorts der Beobachtungs-, Bedien- und/oder Auswerterechner des Diagnosesystems 1 wegfällt.

## Patentansprüche

1. Diagnosesystem (1), ausgelegt für eine Anzahl an technischen Anlagen (5), **dadurch gekennzeichnet, dass** das Diagnosesystem folgende Komponenten umfasst:
- mindestens eine Erfassungseinheit (17) zur Erfassung von Messdaten (MD), welche den technischen Anlagen (5) anfallen und dort mittels Sensoren aufgenommen sind,
- genau eine Speichereinheit (20), welche mit der Erfassungseinheit (17) verbunden ist und mittels welcher die in den technischen Anlagen (5) anfallenden Messdaten (MD) zentral speicherbar sind,
- mindestens eine, mindestens mit der Speichereinheit (20) verbundene, Diagnoseeinheit (25) zur Klassifizierung (K) von aktuellen und/oder vergangenen und/oder erwarteten, von den Messdaten (MD) repräsentierten, Betriebszuständen der technischen Anlagen (5), und
- mindestens eine, mindestens mit der Speichereinheit (20) verbundene, Server-Einheit (21), mittels welcher maschinenlesbare Daten (MC) basierend auf der HTML-Sprache erzeugbar sind, wobei
zumindest Teile der maschinenlesbaren Daten (MC) zu einem Zeitpunkt erzeugt sind, in dem durch mindestens einen Client-Rechner (15) über eine Kommunikationsverbindung (10) mittels eines auf dem Client-Rechner installierten Internet-Browsers (B) eine Verbindung zur Server-Einheit (21) des Diagnosesystems (1) hergestellt ist und die Teile der maschinenlesbaren Daten vom Client-Rechner (15) angefordert sind.

2. Diagnosesystem nach Anspruch 1,
**dadurch gekennzeichnet, dass**
die maschinenlesbaren Daten (MC) mittels des TCP/IP-Protokolls über die Kommunikationsverbindung (10), welche insbesondere ein Intranet und/oder das Internet (I) umfasst, von der Server-Einheit (21) zum Client-Rechner (15) übertragbar sind.

3. Diagnosesystem (1)nach Anspruch 1 oder 2 ,
**dadurch gekennzeichnet, dass**
mittels der maschinenlesbaren Daten (MC) eine dynamische Bedien- und/oder Beobachtungsoberfläche des Diagnosesystems (1) gebildet ist.

4. Diagnosesystem (1) nach einem der Ansprüche 1 bis 3,
**dadurch gekennzeichnet, dass**
die maschinenlesbaren Daten (MC) HTML-Seiten umfassen, welche als vorgefertigte, statische Daten in einem Speicher, insbesondere in der Speichereinheit (20), des Diagnosesystems (1) abgelegt sind und/oder welche von der Server-Einheit (21) durch Zusammenführung eines Seiten-Erstellungscodes und mindestens eines Teils der in der Speichereinheit (20) gespeicherten Messdaten (MD) dynamisch erzeugt sind.

## Claims

1. Diagnostic system (1) designed for a plurality of technical installations (5), **characterised in that** the diagnostic system comprises the following components:
- at least one acquisition unit (17) for collecting measurement data (MD) occurring in the technical installations (5) and recorded there by means of sensors,
- precisely one memory unit (20) that is connected to the acquisition unit (17) and by means of which the measurement data (MD) occurring in the technical installations (5) can be stored centrally,
- at least one diagnostic unit (25), connected at least to the memory unit (20), for classification (K) of current and/or past and/or expected operating states of the technical installations (5) that are represented by the measurement data (MD), and
- at least one server unit (21), connected at least to the memory unit (20), by means of which machine-readable data (MC) based on the HTML language can be generated, with
at least parts of the machine-readable data (MC) being generated at a time at which a connection to the server unit (21) of the diagnostic system (1) has been established by at least one client computer (15) via a communications link (10) by means of an internet browser (B) installed on the client computer and the parts of the machine-readable data having been requested by the client computer (15)

2. Diagnostic system (1) according to claim 1,
**characterised in that**
the machine-readable data (MC) can be transferred from the server unit (21) to the client computer (15) by means of the TCP/IP protocol via the communications link (10) which in particular comprises an intranet and/or the internet (I).

3. Diagnostic system (1) according to claim 1 or 2,
**characterised in that**
a dynamic operating and/or monitoring interface of the diagnostic system (1) is formed by means of the machine-readable data (MC).

4. Diagnostic system (1) according to one of claims 1 to 3,
**characterised in that**
the machine-readable data (MC) comprises HTML pages that are stored as pre-constructed static data in a memory, in particular in the memory unit (20), of the diagnostic system (1) and/or are generated dynamically by the server unit (21) by combining a page generation code and at least part of the measurement data (MD) stored in the memory unit (20).

## Revendications

1. Système de diagnostic (1), conçu pour un certain nombre d'installations (5) techniques, **caractérisé en ce que** le système de diagnostic comprend les composants suivants :
- au moins une unité d'enregistrement (17) pour l'enregistrement de données de mesure (MD), qui sont générées sur les installations (5) techniques et enregistrées à cet endroit au moyen de capteurs,
- exactement une unité de stockage (20), qui est reliée à l'unité d'enregistrement (17) et au moyen de laquelle les données de mesure (MD) générées dans les installations (5) techniques peuvent être stockées de façon centrale,
- au moins une unité de diagnostic (25) reliée au moins à l*'*unité de stockage (20) pour la classification (K) d*'*états de service actuels et/ou passés et/ou escomptés, représentés par les données de mesure (MD), de l'installation (5) technique, et
- au moins une unité de serveur (21), reliée au moins à l'unité de stockage (20), au moyen de laquelle des données (MC) lisibles à la machine peuvent être générées sur la base du langage HTML,
au moins des parties des données (MC) lisibles à la machine étant générées à un moment où une liaison avec l'unité de serveur (21) du système de diagnostic (1) est établie par au moins un ordinateur client (15) au moyen d'une liaison de communication (10) au moyen d'un navigateur Internet (B) installé sur l'ordinateur client et les parties des données lisibles à la machine sont demandées par l'ordinateur client (15).

2. Système de diagnostic selon la revendication 1,
**caractérisé en ce que**
les données (MC) lisibles à la machine peuvent être transmises de l'unité de serveur (21) à l'ordinateur client (15) au moyen du protocole TCP/IP via la liaison de communication (10), qui comprend en particulier un Intranet et/ou l'Internet (I).

3. Système de diagnostic (1) selon la revendication 1 ou 2,
**caractérisé en ce que**
une surface de commande et/ou d'observation dynamique du système de diagnostic (1) est formée au moyen des données (MC) lisibles à la machine.

4. Système de diagnostic (1) selon l'une quelconque des revendications 1 à 3,
**caractérisé en ce que**
les données (MC) lisibles de la machine comprennent des pages HTML qui sont déposées sous la forme de données statiques et préétablies dans une mémoire, en particulier dans l'unité de stockage (20), du système de diagnostic (1) et/ou qui sont générées de façon dynamique par l'unité de serveur (21) par le regroupement d'un code d'établissement de page et d'au moins une partie des données de mesure (MD) stockées dans l'unité de stockage (20) .
